# EUROPÄISCHE PATENTSCHRIFT

(11) **EP 0 443 525 B1**
(45) Veröffentlichungstag und Bekanntmachung des Hinweises auf die Patenterteilung: **18.10.1995**
(21) Anmeldenummer: 91102359.6
(22) Anmeldetag: 19.02.1991
(51) Int. Cl.: F16K 17/196, F16K 7/17, F16K 24/04

(54) **Tankentlüftungsventil**
Tank vent valve
Soupape de purge pour un réservoir

(30) Priorität: 20.02.1990 DE 4005309
(43) Veröffentlichungstag der Anmeldung: 28.08.1991
(73) Patentinhaber: A. KAYSER GMBH & CO. KG, D-37574 Einbeck (DE)
(72) Erfinder: Moses, Erhard, W-3352 Einbeck/Salzderhelden (DE)
(74) Vertreter: Müller-Boré & Partner Patentanwälte

(56) Entgegenhaltungen:
- EP-A- 0 318 978
- BE-A- 684 366
- DK-C- 112 782
- GB-A- 1 112 625
- US-A- 3 189 042
- US-A- 3 960 171

## Beschreibung

Die Erfindung betrifft ein Tankentlüftungsventil zur Abführung von sich in einem Tank ansammelnden Gasen mit einem Gehäuse, in welchem eine Einlaßkammer mit einem Einführungsstutzen und einer Auslaßkammer mit einem Ableitungsstutzen verbunden sind und in welchem in dem Durchgang zwischen den Kammern eine diese trennende Membran angeordnet ist, die von einer Druckfeder, die sich über einen Stützteller auf ihr abstützt, gegen eine offene Stirnwand der Einlaßkammer in Schließstellung vorgespannt ist und den Durchgang öffnet, wenn der Druck in der Einlaßkammer einen vorgewählten Wert übersteigt.

Bei bekannten Entlüftungsventilen dieser Gattung (EP 0 318 978 A1) sind einerseits die Feder in der Auslaßkammer und andererseits der verengte Übergangskanal vor der Einlaßkammer angeordnet. Diese bekannten Entlüftunsventile weisen einen hohen Strömungswiderstand auf. Die Membran öffnet den Durchgang zwischen den Kammern nur sehr geringfügig, wobei sie ständig zwischen Öffnungsstellung und Schließstellugn flattert, sobald der Druck in der Einlaßkammer einen Überdruck mit einem vorgewählten Wert übersteigt. Sobald der Druck in der Einlaßkammer, der auf die Membran einwirkt, nach deren Öffnen zur Auslaßkammer hin wieder auf den vorgewählten Überdruckwert oder einen geringfügig darunter gelegenen Wert abgenommen hat, sperrt die Membran erneut den Durchgang zwischen den Kammern. Dies führt bei den bekannten gattungsgemäßen Tankentlüftungsventilen zu einem quasi-labilen Zustand im Bereich des vorgewählten Überdruckwertes, in welchem sich die Membran ständig öffnet und schließt.

Aus der DE-A-3 444 865 ist ein nicht gattungsgemäßes druckmittelbetätigtes Membranventil bekannt, dessen Membran in dem Ventilgehäuse eingespannt ist und auf einem Stützkörper aufliegt. Bei diesem Ventil wirkt der auf der Einlaßseite anstehende Druck in Schließstellung der Membran auf eine kleinere Membranfläche als in Öffnungsstellung der Membran.

Aus der US-A-3 534 768 ist ein ebenfalls nicht gattungsgemäßes Prüfventil bekannt, welches auch eine im Gehäuse eingespannte Membran aufweist. Neben einer Aus- und Einlaßkammer weist dieses Ventil eine dritte Gehäusekammer mit Belüftungsöffnung auf, wobei die Belüftungsöffnung als Belüftungskanal mit dem Ableitungsstutzen stromabwärts der Auslaßkammer in Verbindung steht.

Aufgabe der Erfindung ist es, ein Tankentlüftungsventil der eingangs genannten Gattung derart auszubilden, daß die Membran nach ihrem Öffnen auch dann noch geöffnet bleibt, wenn der von der Einlaßkammer her auf sie wirkende Druck unter den vorgewählten Überdruckwert fällt, und erst wieder schließt, wenn dieser Druck einen zweiten vorgewählten, wesentlich niedrigeren Überdruckwert erreicht, so daß ein labiler Zustand der Membran, in welchem diese ständig nur geringfügig öffnet und schließt, mit Sicherheit ausgeschlossen ist. Weiterhin ist es Aufgabe der Erfindung, ein solches Tankentlüftungsventil derart zu gestalten, daß die Membran einen höheren Druck im Tank als bisher üblich aufrecht erhalten kann, um dort die Gase unter Druck zu halten, bis die Membran dann öffnet und einen weitgehenden Druckabbau zuläßt und zwar nicht nur bei Motorstillstand sondern auch während des Motorbetriebs, wenn am Ableitungsstutzen kein stationärer Druckzustand herrscht, vielmehr Unterdruckschwankungen auftreten.

Die Aufgabe wird bei einem gattungsgemäßen Tankentlüftungsventil durch die im kennzeichnenden Teil des Anspruchs 1 angegebener Merkmale gelöst.

Dabei ist vorteilhafterweise weiterhin vorgesehen, daß der Kanaldurchmesser des Übergangskanals zwischen ca. 25% und ca. 75%, insbesondere ca. 40% und ca. 60% und bevorzugt 50% des Innendurchmessers des Ableitungsstutzens aufweist.

Bei einer bevorzugten Ausführungsform liegt bei einem Innendurchmesser des Ableitungsstutzens von ca. 4 mm der Kanaldurchmesser des Übergangskanals zwischen ca. 1 mm und ca. 3 mm, und bevorzugt zwischen ca. 1,1 mm und 2 mm. Bei einem Innendurchmesser des Ableitungsstutzens von ca. 6 mm liegt der Kanaldurchmesser des Übergangskanals bevorzugt bei etwa 3 mm.

Die dritte Gehäusekammer, in welcher die Druckfeder angeordnet ist, ist vorteilhafterweise durch eine Belüftungsöffnung zur Umgebung hin offen oder bevorzugt durch einen Belüftungskanal mit dem Ableitungsstutzen direkt verbunden. Bei Motorstillstand herrscht Umgebungsdruck in der Auslaßkammer. Im Motorbetrieb, z.B. im Motorleerlauf bildet sich jedoch in dem Ableitungsstutzen ein in seiner Höhe schwankender Unterdruck aus, der in die Auslaßkammer fortwirkt und somit Einfluß auf die Öffnungscharakteristik der Membran und Druckfeder nimmt, da in der dritten Gehäusekammer unverändert Umgebungsdruck herrscht. Wenn, wie bei der bevorzugten Ausführungsform vorgesehen, die dritte Gehäusekammer über einen eigenen Belüftungskanal mit dem Ableitungsstutzen stromabwärts des verengten Übergangskanals, d.h. auf dessen von der Auslaßkammer abgelegenen Seite verbunden ist, wird ein solcher negativer Einfluß auf die Schließcharakteristik der Membran und der Druckfeder vermieden, da dann in der dritten Gehäusekammer und dem Ableitungsstutzen immer etwa gleiche Drücke herrschen und sich im stationären Zustand bei geschlossener Membran somit in der Auslaßkammer und der dritten Gehäusekammer gleich hohe Drücke bilden. Wenn der Druck in der Einlaßkammer den vorbestimmten Wert übersteigt und die Membran öffnet, breitet sich dieser Druck ebenfalls in die Auslaßkammer aus, d.h. er wirkt dann auf eine wesentlich vergrößerte Membranfläche. Die Druckfeder kann somit die Membran erst wieder schließen, wenn der Druck in der Einlaßkammer und der Auslaßkammer, die miteinander in Verbindung stehen, unter einen weit geringeren Wert fällt. Der zeitliche Verlauf des Druckabfalls wird dabei von dem verengten Übergangkanal wesentlich beeinflußt, der zur Bildung eines Staudruckes führt, dessen Höhe wesentlich von dem spezifischen Strömungsvolumen des Gas-Luftgemisches abhängt.

Der Öffnungsdruck, bei dem die Membran öffnet, ergibt sich aus dem Quotienten aus der Öffnungskraft, die die Schließkraft der Schließfeder übersteigt, und dem Durchmesser der Querschnittsfläche der Membran, die zum zylindrischen Rohr hin gerichtet ist. Der Schließdruck, bei welchem die Membran wieder schließt, ergibt sich aus dem Quotienten der Kraft, die unter die Schließkraft der Schließfeder fällt, und der Querschnittsfläche der gesamten Membran, d.h. der Summe aus der zum zylindrischen Rohr hin gerichteten Querschnittsfläche und der zur Auslaßkammer hin gerichteten Querschnittsfläche der Membran.

Ein wesentlicher Vorteil des erfindungsgemäß vorgesehenen verengten Übergangskanals zwischen Auslaßkammer und Ableitungsstutzen besteht darin, daß über die Größe von dessen Querschnittsfläche das Verhältnis von Luftdurchfluß in Liter pro Stunde zu dem in der Auslaßkammer herrschenden Druck in mm Wassersäule in vorbestimmter Weise eingestellt werden kann.

Ein wesentlicher Effekt der Erfindung besteht darin, daß ein ständiges Öffnen und Schließen der Membran auf einfache Weise vermieden ist und die zeitlichen Abstände zwischen einem Öffnen und darauffolgenden Schließen der Membran wesentlich beeinflußt werden können zum einen durch die Verhältnisse der Querschnittsflächen der Membran und zum anderen durch die Wahl der Größe der Querschnittsfläche des verengten Übergangskanals zur Staudruckbildung in Abhängigkeit vom spezifischen Strömungsvolumen des Luft-Gas-Gemisches.

Andere vorteilhafte Weiterbildungen ergeben sich aus den Unteransprüchen.

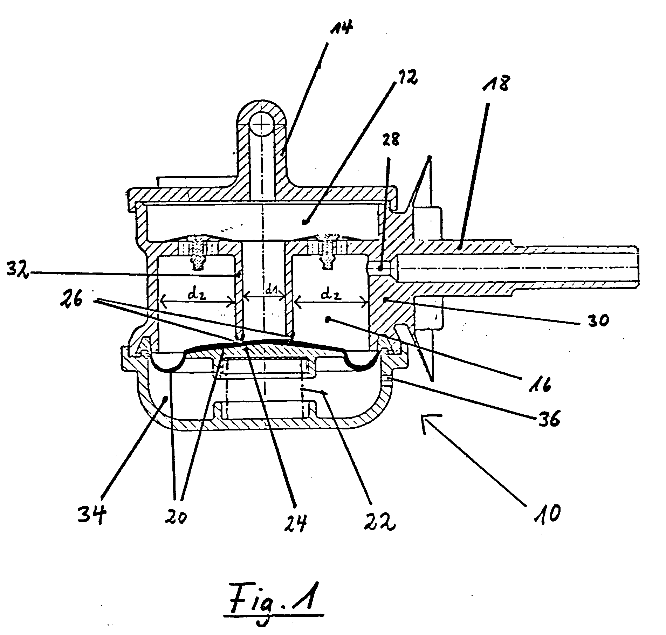

Die Erfindung wird im folgenden anhand der Zeichnung beispielsweise beschrieben; in dieser zeigt:
- Fig. 1: eine Querschnittsansicht einer ersten Ausführungsform eines Tankentlüftungsventils und
- Fig. 2: eine Querschnittsansicht einer weiteren Ausführungsform eines Tankentlüftungsventils
Nach Fig. 1 umfaßt das Tankentlüftungsventil ein Gehäuse 10, in dessen oberen Teil eine Einlaßkammer 12 ausgebildet ist, die mit einem Einführungsstutzen 14 in Verbindung steht. Die Einlaßkammer 12 setzt sich in ihrer zum Einführungsstutzen 14 entgegengesetzten Wand in einem zylindrischen Rohr 32 fort. Um das zylindrische Rohr 32 herum ist eine Auslaßkammer 16 in Form einer Ringkammer ausgebildet, die in einem oberen Endbereich in einen Ableitungsstutzen 18 übergeht.

Eine Membran 20 ist gegen die freie Stirnwand des zylindrischen Rohres 32 der Einlaßkammer 12 durch eine Druckfeder 22 vorgespannt, die in einer dritten Gehäusekammer 34 außerhalb der Einlaßkammer 12 und Auslaßkammer 16 angeordnet ist und über einen Stützteller 24 Druck auf die Membran 20 überträgt.

Im Übergangsbereich zwischen Auslaßkammer 16 und Ableitungsstutzen 18 ist ein verengter Übergangskanal 28 angeordnet, dessen Kanaldurchmesser in vorgewählter Weise kleiner als der Innendurchmesser des Ableitungsstutzens 18 ist. Bei der dargestellten Ausführungsform ist der verengte Übergangskanal 28 in einer verdickten Gehäusewandung 30 ausgebildet, die in den Ableitungsstutzen 18 übergeht.

Bei der beispielsweise dargestellten Ausführungsform beträgt der Innendurchmesser des Einführungsstutzens 14 ca. 3 mm, derjenige des Ableitungsstutzens 18 ca. 6 mm und derjenige des dargestellten verengten Übergangskanals 28 3 mm.

Der Innendurchmesser des zylindrischen Rohres 32 der Einlaßkammer 12 beträgt ca. 6 mm, während bei der als Ringkammer ausgebildeten Auslaßkammer 16 der innere Durchmesser etwa 8 mm und der äußere Durchmesser etwa 30 mm beträgt. Hieraus ergibt sich ein Verhältnis der vom zylindrischen Rohr 32 her beaufschlagten Fläche und der von der Ringkammer 16 her beaufschlagten Fläche der Membran 20 von ca. 1 zu 5. Dabei ist zu beachten, daß die Membran 20 durch den Stützteller 24 abgestützt ist. Der Durchmesser des Stütztellers 24 ist etwa viermal so groß wie derjenige des zylindrischen Rohres 32, so daß sich ein Verhältnis der vom Druck beaufschlagten Flächen von wenigstens 1 : 4 ergibt.

Durch Vorwahl des Durchmessers des verengten Übergangskanals 28, d.h. eines sogenannten Restriktionsdurchmessers im Übergang von der Auslaßkammer 16 zum Ableitungsstutzen 18 kann eine vorgewählte Abhängigkeit eines Druckwertes in der Auslaßkammer 16 vom Luftdurchfluß in Liter pro Stunde eingestellt werden. Da die Auslaßkammer 16 als Ringkammer um das zylindrische Rohr 32 der Einlaßkammer 12 angeordnet ist und der Bodenbereich der Ringkammer ebenso wie des Rohres von der Membran 20 abgedeckt wird, wirkt der Druck in der Ringkammer ebenso auf die Membran 20 in deren Öffnungsrichtung ein wie der Druck im zylindrischen Rohr 32 der Einlaßkammer 12. Solange somit ein Luftdurchfluß vorgewählter Größe vom zylindrischen Rohr 32 in die Ringkammer der Auslaßkammer 16 und von dort durch den verengten Übergangskanal 28 in den Ableitungsstutzen 18 austritt, bleibt die Membran auch dann geöffnet, wenn der Druck im zylindrischen Rohr 32 unter denjenigen Überdruckwert fällt, bei
welchem die Membran 20 erst öffnet, solange in der Auslaßkammer 16 der Umgebungsdruck herrscht. Hierbei wird unterstellt, daß auch in der dritten Gehäusekammer 34, in der die Druckfeder 22 angeordnet ist, Umgebungsdruck herrscht, da die dritte Gehäusekammer 34 durch eine Belüftungsöffnung 36 mit der Umgebung in Verbindung steht.

Nur bei Motorstillstand bildet sich in der Auslaßkammer 16 Umgebungsdruck aus, so daß dann in der Auslaßkammer 16 und der dritten Gehäusekammer 34 beiderseits der Membran 20 etwa gleich hohe Drücke herrschen. Die Schließkraft der Membran 20 wird in diesem Zustand im wesentlichen von der Kraft der Druckfeder 22 bestimmt.

Während eines Motorbetriebs wirken schwankende Unterdrücke bis in den Ableitungsstutzen 18 und durch den verengten Übergangskanal 28 in die Auslaßkammer 16 zurück, so daß sich zu der Kraft der Druckfeder 22 die Kraft addiert, die sich auf Grund der Druckdifferenz zwischen der dritten Gehäusekammer 34 einerseits und der Auslaßkammer 16 andererseits beiderseits der Membran einstellt.

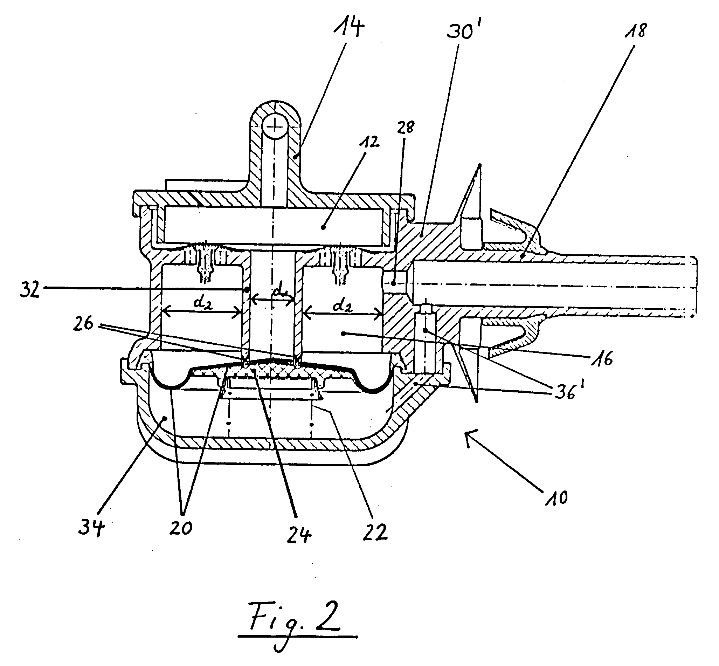

Bei der in Fig. 2 dargestellten weiteren Ausführungsform ist deshalb die zur Umgebung offene Belüftungsöffnung 36 ersetzt durch einen Belüftungskanal 36', der in der verdickten Gehäusewandung 30 ausgebildet ist. Der Belüftungskanal 36' verbindet die dritte Gehäusekammer 34' mit dem Ableitungsstutzen 18 stromabwärts von dem verengten Übergangskanal 28, d.h. auf der von der Auslaßkammer 16 abgelegenen Seite des verengten Übergangskanals 28.

Der bei der zweiten Ausführungsform vorgesehene Belüftungskanal 36' sorgt dafür, daß bei geschlossener Membran 20 der in dem Ableitungsstutzen 18 herrschende Druck nicht nur in der Auslaßkammer 16 sondern auch in der dritten Gehäusekammer 34' herrscht und somit keine Druckdifferenz über die Membran entstehen kann.

Der in dem zylindrischen Rohr 32 herrschende Druck, der zum Öffnen der Membran 20 führen soll, muß größer sein als der Quotient aus der Schließkraft der Druckfeder 22 und der Querschnittsfläche der Membran 20, die zum zylindrischen Rohr 32 hin gerichtet ist. Der Druck, bei dem die Membran 20 wieder schließt, ist wesentlich geringer als der Öffnungsdruck, denn er muß kleiner sein als der Quotient aus der Schließkraft der Druckfeder 22 und der gesamten Membranfläche, die bei der dargestellten Ausführungsform etwa fünfmal so groß wie die in Schließstellung zum zylindrischen Rohr hin gerichtete Querschnittsfläche ist.

## Patentansprüche

1. Tankentlüftungsventil zur Abführung von sich in einem Tank ansammelnden Gasen mit einem Gehäuse (10), in welchem eine Einlaßkammer (12) mit einem Einführungsstutzen (14) und eine Auslaßkammer (16) mit einem Ableitungsstutzen (18) verbunden sind und in welchem in dem Durchgang zwischen den Kammern (12, 16) eine diese trennende Membran (20) angeordnet ist, die von einer Druckfeder (22), die sich über einen Stützteller (24) auf ihr abstützt, gegen eine offene Stirnwand der Einlaßkammer (12) in Schließstellung vorgespannt ist und den Durchgang öffnet, wenn der Druck in der Einlaßkammer (12) einen vorgewählten Wert übersteigt,
**dadurch gekennzeichnet,**
daß der in der Einlaßkammer (12) anstehende Druck in Schließstellung der Membran (20) auf eine kleinere Membranfläche als in Öffnungsstellung der Membran (20) wirkt,
daß zwischen der Auslaßkammer (16) und dem Ableitungsstutzen (18) ein verengter Übergangskanal (28) angeordnet ist, dessen Kanaldurchmesser geringer als der Innendurchmesser des Ableitungsstutzens (18) ist und
daß eine dritte Gehäusekammer (34) mit Belüftungsöffnung (36, 36') außerhalb der Auslaßkammer (16) angeordnet ist, welche die die Membran (20) abstützende Druckfeder (22) aufweist.

2. Tankentlüftungsventil nach Anspruch 1, dadurch **gekennzeichnet,** daß der Kanaldurchmesser des verengten Übergangskanals (28) zwischen ca. 25% und ca. 75%, insbesondere ca. 40% und ca. 60% und bevorzugt 50% des Innendurchmessers des Ableitungsstutzens (18) aufweist.

3. Tankentlüftungsventil nach Anspruch 2, dadurch **gekennzeichnet,** daß bei einem Innendurchmesser des Ableitungsstutzens (18) von ca. 6 mm der Kanaldurchmesser des verengten Übergangskanals (28) zwischen ca. 2 mm und ca. 4 mm, bevorzugt 3 mm, beträgt.

4. Tankentlüftungsventil nach einem der vorhergehenden Ansprüche, dadurch **gekennzeichnet,** daß die Einlaßkammer (12) im Bereich von ihrem Abschluß durch die Membran (20) als zylindrisches Rohr (32) ausgebildet ist, um das die Auslaßkammer (16) als Ringkammer angeordnet ist, wobei die Membran (20) den gemeinsamen offenen Boden von Einlaß- und Auslaßkammer (12, 16) abdeckt.

5. Tankentlüftungsventil nach Anspruch 4, dadurch **gekennzeichnet,** daß die Belüftungsöffnung (36) zur Umgebung offen ist.

6. Tankentlüftungsventil nach Anspruch 4, dadurch **gekennzeichnet,** daß die Belüftungsöffnung als Belüftungskanal (36') mit dem Ableitungsstutzen (18) stromabwärts des bzw. auf der von der Auslaßkammer (16) abgelegenen Seite des verengten Übergangskanals (28) in Strömungsverbindung steht.

7. Tankentlüftungsventil nach Anspruch 4 oder 5, dadurch **gekennzeichnet,** daß der Innendurchmesser des zylindrischen Rohres (32) etwa ein bis zweimal, bevorzugt einmal so groß wie der Kanaldurchmesser des Ableitungsstutzens (18) ist.

8. Tankentlüftungsventil nach einem der vorhergehenden Ansprüche und Anspruch 4, dadurch **gekennzeichnet,** daß der Innenquerschnitt der Auslaßkammer (16) etwa fünf- Bis fünfzehn- und bevorzugt etwa fünfmal so groß wie der Innenquerschnitt des zylindrischen Rohres (32) ist und bevorzugt etwa 6 mm beträgt.

9. Tankentlüftungsventil nach einen der Ansprüche 4 bis 8, dadurch **gekennzeichnet,** daß der Stützteller (24) einen Durchmesser aufweist, der ca. zwei- bis sechsmal, insbesondere drei- bis fünfmal und bevorzugt viermal so groß wie der Durchmesser des zylindrischen Rohres (32) ist.

## Claims

1. Tank-venting valve for discharging gases collecting in a tank, having a housing (10) in which an inlet chamber (12) is connected to an introduction stub (14) and an outlet chamber (16) is connected to a discharge stub (18) and in which there is arranged, in the through-passage between the chambers (12, 16), a diaphragm (20) which separates said chambers and is prestressed by a compression spring (22), which is supported on the diaphragm via a supporting plate (24), against an open end wall of the inlet chamber (12) in the closed position and opens the through-passage when the pressure in the inlet chamber (12) exceeds a pre-selected value, characterized in that the pressure in the inlet chamber (12) acts on a smaller membrane surface area when the membrane (20) is in the closed position than when the membrane (20) is in the open position, in that there is arranged, between the outlet chamber (16) and the discharge stub (18), a narrowed transition channel (28), of which the channel diameter is smaller than the internal diameter of the discharge stub (18), and in that a third housing chamber (34) with ventilation opening (36, 36') is arranged outside the outlet chamber (16), which exhibits the compression spring (22) which supports the diaphragm (20).

2. Tank-venting valve according to Claim 1, characterized in that the channel diameter of the narrowed transition channel (28) is between approximately 25% and approximately 75%, in particular approximately 40% and approximately 60%, and preferably 50% of the interval diameter of the discharge stub (18).

3. Tank-venting valve according to Claim 2, characterized in that, in the case of an internal diameter of the discharge stub (18) of approximately 6 mm, the channel diameter of the narrowed transition channel (28) is between approximately 2 mm and approximately 4 mm, preferably 3 mm.

4. Tank-venting valve according to one of the preceding claims, characterized in that the inlet chamber (12) is designed, in the region of its termination by the diaphragm (20), as a cylindrical tube (32) around which the outlet chamber (16) is arranged as an annular chamber, the diaphragm (20) covering the joint open base of inlet and outlet chambers (12, 16).

5. Tank-venting valve according to Claim 4, characterized in that the ventilation opening (36) is open to the surroundings.

6. Tank-venting valve according to Claim 4, characterized in that the ventilation opening, as ventilation channel (36'), is in flow connection with the discharge stub (18) downstream of, or on, that side of the narrowed transition channel (28) which is remote from the outlet chamber (16).

7. Tank-venting valve according to Claim 4 or 5, characterized in that the internal diameter of the cylindrical tube (32) is approximately the same size to twice the size, preferably the same size, as the channel diameter of the discharge stub (18).

8. Tank-venting valve according to one of the preceding claims and Claim 4, characterized in that the inner cross-section of the outlet chamber (16) is approximately five times to fifteen times, and preferably approximately five times, the size of the inner cross-section of the cylindrical tube (32) and is preferably approximately 6 mm.

9. Tank-venting valve according to one of Claims 4 to 8, characterized in that the supporting plate (24) has a diameter which is approximately two times to six times, in particular three times to five times, and preferably four times, the size of the diameter of the cylindrical tube (32).

## Revendications

1. Soupape de purge pour un réservoir de purge destiné à l'évacuation de gaz s'accumulant dans un réservoir avec un boîtier (10), dans laquelle une chambre d'admission (12) avec un support d'introduction (14) et une chambre d'échappement (16) avec un support de dérivation (18) sont reliés, et dans laquelle, dans le passage entre les chambres (12, 16), une membrane (20) qui les sépare est disposée, précontrainte en position fermée contre une paroi frontale ouverte de la chambre d'admission (12), par un ressort de pression (22) s'appuyant sur elle au travers d'un disque support (24), et qui ouvre le passage lorsque la pression dans la chambre d'admission (12) dépasse une valeur prédéfinie,
caractérisée en ce que
la pression se créant dans la chambre d'admission en position fermée de la membrane (20), agit sur une surface de membrane plus petite qu'en position ouverte de la membrane,
entre la chambre d'échappement (16) et le support de dérivation (18) est disposé un canal de transition (28) rétréci, dont le diamètre de canal est inférieur au diamètre intérieur du support de dérivation (18) et
une troisième chambre de boîtier (34) avec un orifice de ventilation (36, 36') est disposée en dehors de la chambre d'échappement (16), qui présente le ressort de pression (22) supportant la membrane (20).

2. Soupape de purge pour un réservoir selon la revendication 1, caractérisée en ce que le diamètre de canal du canal de transition (28) rétréci se situe entre environ 25% et environ 75%, en particulier environ 40% et environ 60%, et de manière préférée 50% du diamètre intérieur du support de dérivation (18).

3. Soupape de purge pour un réservoir selon la revendication 2, caractérisée en ce que pour un diamètre intérieur du support de dérivation (18) d'environ 6 mm, le diamètre de canal du canal de transition (28) rétréci se situe entre environ 2 mm et environ 4 mm, de manière préférée 3 mm.

4. Soupape de purge pour un réservoir selon l'une quelconque des revendications précédentes, caractérisée en ce que la chambre d'admission (12) a la forme d'un tube cylindrique (32) dans la zone de sa fermeture par la membrane (20), autour duquel la chambre d'échappement (16) est disposée en chambre annulaire, la membrane (20) couvrant les fonds ouverts communs de la chambre d'admission et de la chambre d'échappement (12, 16).

5. Soupape de purge pour un réservoir selon la revendication 4, caractérisée en ce que l'orifice de ventilation (36) est ouvert à l'environnement.

6. Soupape de purge pour un réservoir selon la revendication 4, caractérisée en ce que l'orifice de ventilation, en tant que canal de ventilation (36'), est en liaison d'écoulement avec le support de dérivation (18) en aval du côté, respectivement sur le côté écarté de la chambre d'échappement (16) du canal de transfert (28) rétréci.

7. Soupape de purge pour un réservoir selon les revendications 4 ou 5, caractérisée en ce que le diamètre intérieur du tube cylindrique (32) est d'une à deux fois, de manière préférée une fois la taille du diamètre de canal du support de dérivation (18).

8. Soupape de purge pour un réservoir selon l'une quelconque des revendications précédentes et la revendication 4, caractérisée en ce que la section intérieure de la chambre d'échappement (16) est environ de cinq à quinze fois, de manière préférée environ cinq fois la taille de la section intérieure du tube cylindrique (32) et de manière préférée d'environ 6 mm.

9. Soupape de purge pour un réservoir selon l'une quelconque des revendications 4 à 8, caractérisée en ce que le disque support (24) présente un diamètre d'environ deux à six fois, en particulier trois à cinq fois, et de manière préférée quatre fois la taille du diamètre du tube cylindrique (32).
